# EUROPÄISCHE PATENTANMELDUNG

(11) **EP 3 525 049 A1**
(43) Veröffentlichungstag der Anmeldung: **14.08.2019**
(21) Anmeldenummer: 18155963.4
(22) Anmeldetag: 09.02.2018
(51) Int. Cl.: G05B 17/02, G05B 19/418

(54) **ERMITTELN VON ZUSTANDSDATEN EINES PRODUKTIONSSYSTEMS**

(71) Anmelder: Siemens Aktiengesellschaft, 80333 München (DE)
(72) Erfinder: Klein, Wolfram, 85579 Neubiberg (DE); Malik, Vincent, 80636 München (DE); Wehrstedt, Jan Christoph, 81829 München (DE); Zhou, Yayun, 85579 Neubiberg (DE)

(57) **Zusammenfassung**

Die Erfindung betrifft ein Verfahren zum Ermitteln von Zustandsdaten (D) eines Produktionssystems (1), welches Arbeitsstationen (2a, 2b, 3a, 3b) und reale Sensoren (4a, 4b) enthält, umfassend die Schritte:
- Bildung eines Modells (M) des Produktionssystems (1) mit virtuellen Arbeitsstationen (v2a, v2b, v3a, v3b), virtuellen Sensoren (v4a, v4b) mit Entsprechungen in der Realität und rein virtuellen Simulations-Sensoren (v5a, v5b),
- Simulation eines virtuellen Arbeitsablaufs des Produktionssystems (1) in dem Modell (M),
wobei Messwerte (Z₂ₐ, Z_{2b}) einer Anzahl von realen Sensoren (4a, 4b) bereitgestellt werden und simulierte Sensordaten (S₂ₐ, S_{2b}) virtueller Sensoren (v4a, v4b) mit den Messwerten (Z₂ₐ, Z_{2b}) verglichen werden, und
wobei Sensordaten (S₃ₐ, S_{3b}) der Simulations-Sensoren (v5a, v5b) simuliert werden,
- Bildung von Zustandsdaten (D) des Produktionssystems (1) auf Basis der simulierten Sensordaten (S₂ₐ, S_{2b}, S₃ₐ, S_{3b}).

Die Erfindung betrifft des Weiteren eine Zustandsermittlungs-Einrichtung (6) zum Ermitteln von Zustandsdaten (D) eines Produktionssystems (1), eine entsprechende Steuereinrichtung (v2a, v2b, v3a, v3b) und ein diesbezügliches Produktionssystem (1).

## Beschreibung

Die Erfindung betrifft ein Verfahren und eine Zustandsermittlungs-Einrichtung zum Ermitteln von Zustandsdaten eines Produktionssystems sowie eine entsprechende Steuereinrichtung bzw. ein diesbezügliches Produktionssystem.

Ein Produktionssystem umfasst Arbeitsstationen, die miteinander produktionstechnisch verbunden sind. Ein Beispiel für ein Produktionssystem ist eine Fertigungsstraße bzw. Fertigungslinie mit unterschiedlichen Fertigungsmaschinen als Arbeitsstationen. Ein sehr einfach aufgebautes Produktionssystem wird aus einer linearen Kette von Arbeitsstationen geformt. Oftmals sind Produktionssysteme jedoch komplex mit einer großen Anzahl miteinander vernetzter Arbeitsstationen.

Einige Arbeitsstationen eines Produktionssystems können mit Sensoren ausgestattet sein. Auf Basis der Daten dieser Sensoren kann z.B. eine Regelung des Arbeitsablaufs erfolgen. Man könnte solche Arbeitsstationen als "intelligente Maschinen" bezeichnen. Andere Arbeitsstationen des Produktionssystems können völlig ohne Sensoren agieren. Man könnte diese Arbeitsstationen als "nicht-intelligente Maschinen" bezeichnen.

Ein Problem eines Produktionssystems, insbesondere bei einem hohen Grad an Komplexität, wie es in aktuellen Fabriken beim Übergang zu Industrie 4.0 vorkommt, ist die Ermittlung von nicht gewünschten Zuständen, z.B. ein Bearbeitungsstau an einer fertigungstechnischen Engstelle ("Bottle neck") bzw. ein Leerstand. Dies gilt insbesondere im Hinblick auf die "nicht-intelligenten" Maschinen. Darüber hinaus ist die automatisierte Steuerung und Optimierung des Produktionssystems an den "nicht-intelligenten" Maschinen in der Regel nicht möglich.

Eine genaue Vorhersage eines zukünftigen Fabrikzustandes für diese "nicht-intelligenten" Maschinen und somit auch für ein entsprechendes Produktionssystem in der Gesamtheit ist somit nur schwer möglich, da durch die fehlende Sensorik und Kommunikation zu wenige Informationen vorhanden sind. Insbesondere sind dadurch auch das Finden des "besten" weiteren produktionstechnischen Vorgehens und damit die Generierung eines dynamischen Steuerprotokolls sehr schwierig.

Dies stellt einen gravierenden Nachteil dar, da aufgrund dessen eine Steuerung eines gemischten Systems, bestehend aus "intelligenten" und "nicht-intelligenten" Maschinen, wie es z.B. bei dem kontinuierlichen Übergang zu Industrie 4.0. auftritt, nur schwer bzw. nicht optimal möglich ist.

Eine relative teure und aufwendige Lösung wäre es, die "nicht-intelligenten" Maschinen mit realen Sensoren und Kommunikationstechnik nachzurüsten. Dies ist jedoch sehr teuer und zuweilen aus technischen Gründen nicht immer an jeder Maschine möglich.

Es ist eine Aufgabe der vorliegenden Erfindung, ein alternatives, komfortableres Verfahren und eine Zustandsermittlungs-Einrichtung zum Ermitteln von Zustandsdaten eines Produktionssystems anzugeben, sowie eine entsprechende Arbeitsstation bzw. ein diesbezügliches Produktionssystem, mit dem die oben beschriebenen Nachteile vermieden werden können.

Diese Aufgabe wird durch ein Verfahren gemäß Patentanspruch 1, eine Zustandsermittlungs-Einrichtung gemäß Patentanspruch 11, eine Steuereinrichtung gemäß Patentanspruch 12 und ein Produktionssystem gemäß Patentanspruch 13 gelöst.

Das erfindungsgemäße Verfahren dient zum Ermitteln von Zustandsdaten, und ggf. auch der Steuerung, eines Produktionssystems, wie z.B. einer Fertigungs- oder Bearbeitungslinie, insbesondere einer Fertigungsstraße. Ein solches Produktionssystem umfasst Arbeitsstationen, wie z.B. Produktionsstationen, Bearbeitungsstationen, Fertigungsvorrichtungen, Maschinensysteme bzw. Robotersysteme oder Reinigungsstationen, und reale Sensoren, wie z.B. Lichtschranken, Taster, Temperaturfühler, Druckmessgeräte, Kameras, etc.. Die Arbeitsstationen sind vorzugsweise untereinander arbeitstechnisch vernetzt, wobei diese Vernetzung mit steigender Anzahl der Arbeitsstationen in der Regel zunehmend komplexer wird. Die Sensoren dienen der Überwachung des Produktionsablaufs und detektieren bevorzugt Material- oder Werkstückbewegungen.

Das erfindungsgemäße Verfahren umfasst die Schritte:

### - Bildung eines Modells

In diesem Schritt wird das Produktionssystem auf das Modell abgebildet. In diesem Modell sind die Arbeitsstationen als virtuelle Arbeitsstationen abgebildet und zumindest einer Anzahl der realen Sensoren, vorzugsweise allen realen Sensoren, sind jeweils virtuelle Sensoren zugeordnet. Zusätzlich umfasst das Modell weitere, rein virtuelle Sensoren (im Rahmen der Erfindung als "Simulations-Sensoren" bezeichnet), die keinen realen Sensoren des realen Produktionssystems entsprechen bzw. zugeordnet sind. Der Begriff "Simulations-Sensor" dient der Unterscheidung von den normalen (virtuellen) Sensoren. Einem (virtuellen) Sensor ist in der Simulation stets ein Sensor in der Realität zugeordnet, einem Simulations-Sensor nicht. In einem sehr einfachen Beispiel kann in einem Modell eine virtuelle Arbeitsstation bzw. ein virtueller Sensor auch durch einen mit der Bearbeitung gekoppelten Wert, z.B. der Arbeitsgeschwindigkeit oder durch ein entsprechendes Wertetupel repräsentiert werden.

### - Simulation eines virtuellen Arbeitsablaufs

Dabei wird der Arbeitsablauf des Produktionssystems in dem Modell, also das Zusammenspiel der virtuellen Arbeitsstationen, innerhalb eines Zeitintervalls simuliert. Dies geschieht analog zu einem realen Arbeitsablauf des Produktionssystems.

"Analog" bedeutet im Rahmen der Erfindung, dass zu einem simulierten Arbeitsablauf eine Entsprechung in der Realität besteht. Beispielsweise ist die Startzeit dieselbe oder es wird ein vergangener Zustand des realen Produktionssystems simuliert. Zumindest basiert die Simulation auf einem möglichst realen Zustand des Produktionssystems. Oftmals ist die Geschwindigkeit des simulierten Arbeitsablaufs schneller als der reale Arbeitsablauf, was den Vorteil hat, dass zukünftige Zustände des Produktionsablaufs im Rahmen einer bestimmten Wahrscheinlichkeit dargestellt werden können. Es kann aber auch von Vorteil sein, den simulierten Arbeitsablauf mit dem realen Arbeitsablauf zu synchronisieren, was für eine Regelung des realen Produktionssystems basierend auf Zustandsdaten der Simulation ermöglicht. Alternativ oder ergänzend ist auch möglich, die Simulation ausgehend von einem festgelegten Zustand des realen Produktionssystems so schnell wie möglich (mit variierenden Parametern) mehrfach zu durchlaufen, um Informationen über einen optimierten Produktionsablauf oder eine Verhinderung von Fehlzuständen zu erlangen.

Das Zeitintervall, den die Simulation abbildet, kann frei gewählt werden, insbesondere abhängig von einem der vorangehend beschriebenen Anwendungsfälle. Wichtig ist lediglich, dass die Simulation Zustandsdaten eines Zustands des realen Produktionssystems über ein definiertes Zeitintervall bzw. zu einem definierten Zeitpunkt simulieren kann.

Im Rahmen der Simulation werden (virtuelle) Sensordaten einer Anzahl von realen Sensoren zugeordneten virtuellen Sensoren simuliert, und diese Sensordaten mit Messwerten von entsprechenden realen Sensoren verglichen. Diese Messwerte können insbesondere (reale) Sensordaten zu eingehenden Mengen bzw. ausgehende Mengen von Materialien oder Werkstücken und/oder (reale) Sensordaten über die Produktivität von Arbeitsstationen sein.

Im Rahmen der vorliegenden Erfindung werden dabei Daten aus der realen Welt als "Messwerte" bezeichnet, da sie gemessen wurden, und Daten aus der Simulation als (virtuelle) "Sensordaten", da sie simulierte Daten der virtuellen Sensoren sind. Die Messwerte können als ein Z-Wertetupel Zᵢ(nᵢ,t,cᵢ) angegeben werden, wobei nᵢ eine individuelle Sensoradresse ist, t die Zeit und cᵢ Informationen über die aktuellen Steuerungsparameter einer Arbeitsstation enthält, welcher der Sensor ggf. zugeordnet ist. Der Index i ist einfach eine eindeutige Zahl, die die Messwerte selber adressiert. Die Sensordaten Sᵢ(nᵢ,t,cᵢ) können als entsprechende Wertetupel angegeben werden.

### - Ermittlung von simulierten Sensordaten der Simulations-Sensoren

Diese Sensordaten basieren wie vorangehend gesagt auf der Simulation. Da sie von den Simulations-Sensoren stammen, also von rein virtuellen Sensoren, die keine Entsprechung in der Realität haben, beinhalten sie im Rahmen einer bestimmten Wahrscheinlichkeit Informationen über den Stand der Produktion in einem nicht überwachten Teil des Produktionssystems. Für die Simulations-Sensoren können die Sensordaten Sᵢ(nᵢ,t) auch ohne Informationen über die aktuellen Steuerungsparameter einer Arbeitsstation cᵢ angegeben werden, wenn keine Steuerungsparameter notwendig sein sollten. Messwerte zum Vergleich gibt es hier nicht, da keine realen Sensoren existieren.

### - Bildung von Zustandsdaten

Auf Basis der bzw. aus einer Menge der simulierten Sensordaten, also einem Teil oder allen Sensordaten, werden (ggf. nach einer zusätzlichen Bearbeitung der Daten) Zustandsdaten des Produktionssystems gebildet. Diese Zustandsdaten können dabei die Sensordaten an sich oder aber auch auf den Sensordaten anderweitig basierende oder sich aus den Sensordaten ergebende Informationen umfassen, z.B. daraus berechnete Werte, Informationen zu Engstellen oder Informationen zu Steuerungsmöglichkeiten, oder bereits konkrete Vorschläge zu Steuerdaten umfassen.

In einer optionalen Ausgabe werden die Zustandsdaten zum Produktionssystem, z.B. simulierte Sensordaten zum virtuellen Arbeitsablauf, ausgegeben. Dies kann beispielsweise in Form einer Tabelle oder einer graphischen Darstellung geschehen. Die Ausgabe kann aber alternativ oder ergänzend auch in Form von Steuerdaten geschehen, welche dazu ausgelegt sind, Arbeitsstationen in dem Produktionssystem zu steuern, wie dies später noch erläutert wird.

Das Verfahren kann beispielsweise zur Materialflusssimulation für eine Produktion eines Produktionssystems umfassend eine Mischung aus "intelligenten" und "nicht-intelligenten" Maschinen als Arbeitsstationen eingesetzt werden. Mittels der Simulation gelingt es innerhalb gewisser Fehlergrenzen den Zustand des gesamten Produktionssystems innerhalb des Zeitintervalls zu ermitteln, z.B. durch Zustandsdaten, welche diesen Zustand ganz oder teilweise beschreiben können.

Der Vorteil der Simulation mittels eines solchen Modells ist, dass an kritischen oder komplexen Stellen des Produktionssystems, z.B. in einer Fabrik, weitere (simulierte) Zustandsdaten bereitstellt werden können, sodass die Produktion insgesamt besser analysiert werden kann, ohne dass dort reale Messungen durchgeführt werden müssen.

Dazu sollte das Produktionssystem durch das (Simulations-) Modell quasi identisch abgebildet werden, insbesondere als ein digitaler Zwilling, und die Simulation der "intelligenten" und "nicht-intelligenten" Maschinen analog zur (realen) Produktion laufen. Existierende (reale) Produktionsdaten werden von den Sensoren in Form von Messwerten kontinuierlich erfasst und mit den Ergebnissen der Simulation verglichen.

Eine erfindungsgemäße Zustandsermittlungs-Einrichtung dient zum Ermitteln von Zustandsdaten eines Produktionssystems, welches reale Sensoren und Arbeitsstationen umfasst. Die Simulation wird mittels eines Modells des Produktionssystems durchgeführt, in dem die Arbeitsstationen als virtuelle Arbeitsstationen abgebildet sind und virtuelle Sensoren (v4a, v4b) einer Anzahl der realen Sensoren (4a, 4b) zugeordnet sind. Zusätzlich umfasst das Modell rein virtuelle Simulations-Sensoren, die keinen realen Sensoren des realen Produktionssystems entsprechen bzw. zugeordnet sind.

Die Zustandsermittlungs-Einrichtung ist insbesondere zur Durchführung des erfindungsgemäßen Verfahrens ausgelegt und umfasst:
- Eine Simulationseinheit zur Simulation eines virtuellen Arbeitsablaufs des Produktionssystems in dem Modell innerhalb eines Zeitintervalls, analog zu einem realen Arbeitsablauf. Die Simulationseinheit ist dabei dazu ausgelegt,
   i) Sensordaten einer Anzahl von realen Sensoren entsprechenden virtuellen Sensoren zu simulieren und diese Sensordaten mit bereitgestellten Messwerten von entsprechenden realen Sensoren zu vergleichen, und
   ii) Sensordaten einer Anzahl von Simulations-Sensoren zu simulieren,
- Eine Ermittlungseinheit zur Ermittlung von Zustandsdaten des Produktionssystems aus einer Menge der simulierten Sensordaten.
- Optional eine Ausgabeeinheit zur Ausgabe von Zustandsdaten des Produktionssystems.

Eine erfindungsgemäße Steuereinrichtung für ein Produktionssystem, insbesondere für zumindest eine Arbeitsstation des Produktionssystems, umfasst eine erfindungsgemäße Zustandsermittlungs-Einrichtung, und ist dazu ausgestaltet, zumindest eine Arbeitsstation in dem Produktionssystem in Abhängigkeit von simulierten Zustandsdaten zu steuern.

Ein erfindungsgemäßes Produktionssystem umfasst eine erfindungsgemäße Zustandsermittlungs-Einrichtung und bevorzugt eine erfindungsgemäße Steuereinrichtung.

Ein Großteil der zuvor genannten Komponenten der Zustandsermittlungs-Einrichtung, können ganz oder teilweise in Form von Softwaremodulen in einem Prozessor einer Steuereinrichtung bzw. einer Rechenvorrichtung realisiert werden. Eine weitgehend softwaremäßige Realisierung hat den Vorteil, dass Steuereinrichtungen bisher verwendeter Arbeitsstationen auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in ein Rechensystem bzw. eine Speichereinrichtung einer Steuereinrichtung einer Arbeitsstation ladbar ist, mit Programmabschnitten, um alle Schritte des erfindungsgemäßen Verfahrens auszuführen, wenn das Programm in dem Rechensystem bzw. der Steuereinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Zum Transport zum Rechensystem bzw. zur Steuereinrichtung und/oder zur Speicherung an oder in dem Rechensystem bzw. der Steuereinrichtung kann ein computerlesbares Medium, beispielsweise ein Memorystick, eine Festplatte oder ein sonstiger transportabler oder fest eingebauter Datenträger dienen, auf welchem die von einem Rechensystem bzw. einer Rechnereinheit der Steuereinrichtung einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Bevorzugt erfolgt zur Bildung des Modells eine Bereitstellung von Arbeitsparametern einer Anzahl von Arbeitsstationen des Produktionssystems, insbesondere aller Arbeitsstationen. Bevorzugte Arbeitsparameter sind die Arbeitsgeschwindigkeit oder die Ausgabemenge pro Zeit.

Bevorzugt wird basierend auf dem Vergleich der (realen) Messwerte der Anzahl von realen Sensoren aus dem realen Arbeitsablauf des Produktionssystems mit den simulierten Sensordaten der Anzahl von diesen realen Sensoren entsprechenden (bzw. diesen Sensoren zugeordneten) virtuellen Sensoren das Modell des Produktionssystems angepasst. Es werden also zunächst (virtuelle) Sensordaten simuliert, diese (virtuellen) Sensordaten mit der Realität verglichen (Messdaten) und das Modell an die Realität angepasst. Dies dient der vorteilhaften Kalibration des Modells.

Wie eingangs erwähnt kann es sein, dass ein Teil der Arbeitsstationen in dem Produktionssystem keine realen Sensoren aufweist. Diese Arbeitsstationen können daher als "nicht-intelligente Maschinen" bezeichnet werden. In dem Modell ist dann bevorzugt eine Anzahl von Simulations-Sensoren, also Sensoren die ausschließlich in der Simulation existieren und keine Entsprechungen in der Realität haben, gerade solchen datentechnisch inaktiven Arbeitsstationen entsprechenden virtuellen Arbeitsstationen zugeordnet. Diese Simulations-Sensoren simulieren Sensordaten zu dem Arbeitsablauf dieser virtuellen Arbeitsstationen gemäß dem Modell. Damit können an diesen Stellen in der Realität fehlende Messwerte (die mangels Sensoren nicht ermittelbar sind) so weit wie möglich durch simulierte Sensordaten repräsentiert werden. Die in der Realität "nicht-intelligenten Maschinen" werden also in der Simulation zu virtuellen "intelligenten Maschinen".

Bevorzugt umfassen die Zustandsdaten des Produktionssystems für eine Anzahl von Arbeitsstationen quantitative Parameter des simulierten Arbeitsablaufs über das Zeitintervall. Es werden also z.B. Eingangsmenge, Ausgangsmenge und ggf. auch die Verarbeitungsgeschwindigkeit numerisch simuliert. Diese Werte können in Form von Schaubildern oder Kurven ausgegeben werden.

Alternativ oder ergänzend umfassen die Zustandsdaten des Produktionssystems eine Voraussage über Produktionsparameter im Arbeitsablauf, bevorzugt zu Fehlzuständen. Ein "Fehlzustand" ist in der Regel durch ein Abweichen der Werte des simulierten Produktionsablaufs aus einem vorab geschätzten oder festgelegten (Soll-)Wertebereich gekennzeichnet. Dies hat den Vorteil dass ein zukünftiger wahrscheinlicher Zustand des Produktionssystems abgebildet werden kann, in dem ggf. auch zu erwartende Fehler im Arbeitsablauf, z.B. ein Stocken der Bearbeitung aufgrund eines unerwarteten "Bottlenecks" (weil z.B. eine Maschine plötzlich ausfällt), rechtzeitig erkannt werden kann. In der Praxis kann dies automatisch durch Abweichen der Simulationsdaten des simulierten Produktionsablaufs aus besagtem vorbestimmten Wertebereich erkannt werden. Hierzu erfolgt vorzugsweise die Simulation schneller, als der reale Arbeitsablauf, um eine Voraussage von zukünftigen potentiellen Zuständen zu erhalten.

Alternativ oder ergänzend umfassen die Zustandsdaten des Produktionssystems bevorzugt eine Information über systematische Fehler des Produktionssystems und/oder Informationen darüber, wie ein Fehlzustand vermieden werden kann. Im Unterschied zu der vorangehenden bevorzugten Ausführungsform steht also hier nicht der Arbeitsablauf im Vordergrund, sondern die Eigenschaften der Arbeitsstationen oder deren produktionstechnische Verknüpfungen bzw. nicht eine Aussage über die Fehlzustände an sich, sondern darüber, welche Änderungen des Produktionssystems getroffen werden können, um einen Fehlzustand vor seinem Eintreten zu verhindern. Dies kann mittels einer Simulation erreicht werden, da diese wie oben bereits angemerkt wurde, einen Produktionsablauf schneller abbilden kann, als er in der Realität benötigt. Damit kann in der Simulation ein Fehlzustand erkannt werden, bevor er eintritt, und bei Erkennen des Fehlzustandes automatisch Parameter des Modells geändert werden, bis der Fehlzustand in der Simulation nicht mehr auftritt. Gemäß diesen geänderten Parametern kann der reale Arbeitsablauf dann geändert werden, z.B. durch eine entsprechende Steuerung von Arbeitsstationen.

Beispielsweise kann bei einem Auftreten eines Fehlzustandes in der Simulation, z.B. weil eine der Arbeitsstationen das ihr zugewiesene Pensum nicht erfüllen kann, eine weitere Simulation mit gleichen Messdaten aber etwas anderen Arbeitsparametern der Arbeitsstationen gestartet werden. Dies geschieht so lange, bis der Fehlzustand in der Simulation nicht mehr auftritt. Die durch diese Simulation erhaltenen Arbeitsparameter können dann eine neue Grundlage zur Steuerung von Arbeitsstationen darstellen, die diesen Fehlzustand verhindern kann (z.B. durch die Drosselung der Arbeitsgeschwindigkeit einiger anderer Arbeitsstationen oder die Erhöhung der Arbeitsgeschwindigkeit von Arbeitsstationen, welche die kritische Arbeitsstation entlasten könnten).
Bevorzugt kann die Simulation außer der Ermittlung der Zustände des Produktionssystems also auch Strategien vorschlagen, wie z.B. ein Bottleneck vermieden werden könnte.

Bevorzugt erfolgt die Simulation mittels eines (entsprechend) trainierten neuronalen Netzwerks. Eine bevorzugte Zustandsermittlungs-Einrichtung ist diesbezüglich dazu ausgestaltet, basierend auf Daten zu der Simulation und Messwerten der realen Sensoren ein neuronales Netzwerk zu trainieren.

Wie erwähnt, können die Zustandsdaten vorzugsweise je nach konkretem Anwendungszweck zeitlich synchron zu einem realen Arbeitsablauf oder schneller als ein realer Arbeitsablauf ermittelt werden.

Eine bevorzugte Zustandsermittlungs-Einrichtung ist daher dazu ausgestaltet, zeitlich synchron zu einem realen Arbeitsablauf Zustandsdaten zu ermitteln. Dies hat den Vorteil, dass Daten für eine potentielle Regelung eines Produktionssystems in Echtzeit zur Verfügung gestellt werden können. Alternativ oder ergänzend kann die Zustandsermittlungs-Einrichtung aber auch dazu ausgestaltet sein, schneller als ein realer Arbeitsablauf Zustandsdaten zu ermitteln. Dies hat den Vorteil, dass Fehlzustände mittels der Simulation noch vor ihrem Auftreten erkannt werden können.

Für eine Fehleranalyse wäre aber auch erst eine nachlaufende bzw. spätere Simulation und Zustandsdatenermittlung denkbar. Bevorzugt wird (mindestens) eine Arbeitsstation des Produktionssystems entsprechend eines Ergebnisses der Simulation gesteuert. Beispielsweise kann eine Reihe von Arbeitsstationen dermaßen gesteuert werden, dass ein schon aufgetretenes potentielles Bottleneck beseitigt wird oder dessen Ausmaß reduziert wird, in dem z.B. eine Kapazität von parallelen Arbeitsstationen vorübergehend etwas erhöht wird.

Datentechnisch inaktive Arbeitsstationen weisen oftmals keine automatische Steuerschnittstelle auf, so dass in diesem Fall lediglich eine Steuerung der anderen (datentechnisch aktiven) Arbeitsstationen erfolgen kann. In dem Fall, in dem es möglich ist, eine datentechnisch inaktive Arbeitsstation mittels einer (gegebenenfalls nachgerüsteten) Datenschnittstelle zu steuern, und dieser in der Simulation ein Simulations-Sensor zugewiesen ist (was einen bevorzugten Fall darstellt) wird bevorzugt (auch) diese datentechnisch inaktive Arbeitsstation gesteuert. Diese Steuerung kann insbesondere eine Regelung basierend auf den entsprechenden virtuellen Sensordaten beinhalten. Mittels dieser virtuellen Sensordaten kann die Arbeitsstation beispielsweise bei Auftreten eines nachfolgenden Staus gedrosselt werden oder bei einem Leerstand nachfolgender Maschinen beschleunigt werden.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: ein Ausführungsbeispiel für ein Produktionssystem,
- Figur 2: eine Darstellung von Komponenten eines Ausführungsbeispiels eines erfindungsgemäßen Produktionssystems,
- Figur 3: eine schematische Darstellung eines Ausführungsbeispiels eines bevorzugten Modells,
- Figur 4: ein Ablaufplan für einen möglichen Ablauf eines erfindungsgemäßen Verfahrens,
- Figur 5: eine schematische Darstellung einer bevorzugten Ausführungsform eines Produktionssystems.

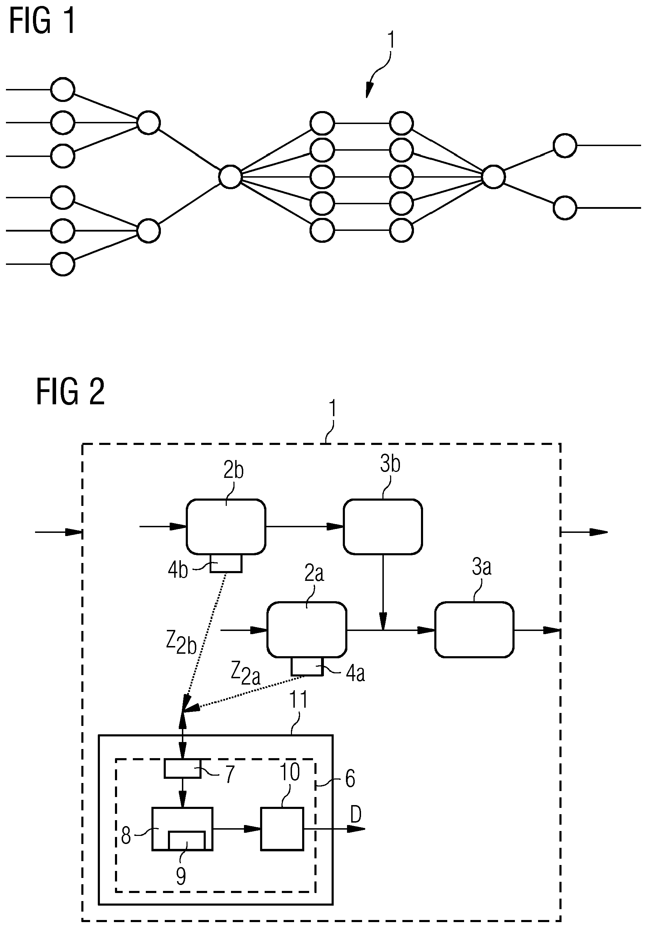

Figur 1 skizziert eine schematische Darstellung eines potentiellen Produktionssystems 1. Dargestellt ist eine Fertigungsstraße aus Produktionsanlagen (schwarze Punkte), die als Arbeitsstationen (siehe die Bezugsziffern 2a, 2b, 3a, 3b in den folgenden Figuren) im Sinne der Erfindung angesehen werden können. Die Arbeitsrichtung verläuft beispielsweise von links nach rechts. Das Produktionssystem weist eine gewisse Komplexität auf, in dem mehrere Werkstücke links von insgesamt sechs Produktionsanlagen bearbeitet werden, die Halbzeuge jeweils dreier Produktionsanlagen auf eine weitere Produktionsanlage gegeben werden (was ggf. einen Stau von Halbzeugen hervorrufen könnte), deren Produktionsergebnisse wiederum in einer einzigen Produktionsanlage zusammenlaufen (ebenfalls eine Stauungsmöglichkeit). Danach werden Halbzeuge auf insgesamt fünf Anlagen verteilt (von denen möglicherweise eine ausfallen könnte) und die Produktionsergebnisse wieder zusammengeführt. Wie vorangehend bereits angemerkt wurde, birgt ein solches System eine Reihe von potentiellen Engstellen oder Fehlermöglichkeiten. Anhand des fertigen Produkts ist nur sehr schwer feststellbar, welche der Produktionsanlagen welchen Fehler aufgewiesen haben könnte. Genauso schwer ist es vorauszusagen, wie die Produktion optimiert werden könnte, bzw. wie Engstallen vermieden werden können. Dabei stellt das hier abgebildete Produktionssystem 1 noch ein vergleichsweise einfaches System dar.

Figur 2 zeigt eine schematische Darstellung eines zu Figur 1 vereinfachten Produktionssystems 1 mit den für die Erfindung relevanten Komponenten. Das Produktionssystem 1 umfasst - zum besseren Verständnis - hier lediglich vier Arbeitsstationen 2a, 2b, 3a, 3b und zwei Sensoren 4a, 4b an zwei dieser Arbeitsstationen 2a, 2b. Diese Sensoren liefern Messdaten Z₂ₐ, Z_{2b} an eine Zustandsermittlungs-Einrichtung 6, die gleichzeitig als Steuereinrichtung 11 ausgestaltet sein kann.

Werkstücke bzw. Materialien treten in das Produktionssystem 1 ein (linker äußerer Pfeil) und verlassen es nach einer Bearbeitung wieder (rechter äußerer Pfeil). Der Verlauf der Bearbeitung ist innerhalb des Produktionssystems 1 mittels Pfeilen dargestellt. Die beiden linken Arbeitsstationen 2a, 2b, die mit ihren Sensoren 4a, 4b datentechnisch aktive Arbeitsstationen 2a, 2b ("Intelligente Maschinen") darstellen, erhalten Waren bzw. Werkstücke und bearbeiten diese. Die bearbeiteten Stücke werden dann jeweils an die rechts benachbarten Arbeitsstationen 3a, 3b weitergeführt, welche eine weitere Bearbeitung durchführen. Dabei werden die von der rechten oberen Arbeitsstation 3b bearbeiteten Stücke zusammen mit den von der linken unteren Arbeitsstation 2a bearbeiteten Stücke zusammen an die rechte untere Arbeitsstation 3a geführt. Die beiden rechten Arbeitsstationen 3a, 3b stellen datentechnisch inaktive Arbeitsstationen 3a, 3b ("Nicht-intelligente Maschinen") dar, da sie keine Sensoren aufweisen.

Die Zustandsermittlungs-Einrichtung 6 umfasst eine Schnittstelle 7 zur Datenkommunikation mit dem Produktionssystem 1. Mittels dieser Schnittstelle können Messdaten Z₂ₐ, Z_{2b} der Sensoren 4a, 4b der Zustandsermittlungs-Einrichtung 6 bereitgestellt werden oder Steuerbefehle von der Steuereinrichtung 11 an das Produktionssystem 1 übermittelt werden.

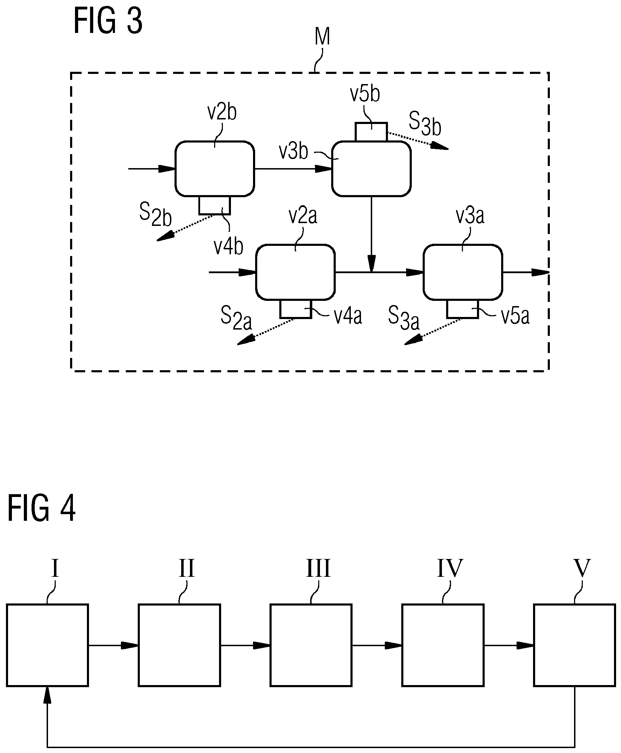

Die Zustandsermittlungs-Einrichtung 6 umfasst des Weiteren eine Simulationseinheit 8 zur Simulation eines virtuellen Arbeitsablaufs des Produktionssystems 1 in dem Modell M (s. Figur 3) innerhalb eines Zeitintervalls, analog zu einem realen Arbeitsablauf. Die Simulationseinheit 8 ist dabei dazu ausgelegt, Sensordaten S₂ₐ, S_{2b}, S₃ₐ, S_{3b} einer Anzahl von realen Sensoren 4a, 4b entsprechenden virtuellen Sensoren v4a, v4b und von Simulations-Sensoren v5a, v5b zu simulieren und die Sensordaten S₂ₐ, S_{2b} der entsprechenden virtuellen Sensoren v4a, v4b mit bereitgestellten Messwerten Z₂ₐ, Z_{2b} von entsprechenden realen Sensoren 4a, 4b zu vergleichen.

Die Zustandsermittlungs-Einrichtung 6 umfasst des Weiteren eine Ermittlungseinheit 9 zur Ermittlung von Zustandsdaten des Produktionssystems 1 aus einer Menge der simulierten Sensordaten S₂ₐ, S_{2b}, S₃ₐ, S_{3b}. In dem hier dargestellten Beispiel ist die Ermittlungseinheit 9 Teil der Simulationseinheit 8. Diese simulierten Sensordaten S₂ₐ, S_{2b}, S₃ₐ, S_{3b} sind ggf. zusammen mit weiteren Daten wie z.B. Daten zur empfohlenen Arbeitsgeschwindigkeit Zustandsdaten D des Produktionssystems 1.

Die Zustandsermittlungs-Einrichtung 6 kann auch wie hier eine Ausgabeeinheit 10 zur Ausgabe von Zustandsdaten des Produktionssystems 1 umfassen, z. B. eine Benutzerschnittstelle oder eine Schnittstelle zu einem Netzwerk etc.

Figur 3 zeigt eine schematische Darstellung eines möglichen Modells M des Produktionssystems 1 nach Figur 2. Dieses Modell M umfasst virtuelle Arbeitsstationen v2a, v2b, v3a, v3b, die in ihrer Funktionsweise den realen Arbeitsstationen 2a, 2b, 3a, 3b des Produktionssystems entsprechen sollten. Zusätzlich zu den virtuellen Sensoren v4a, v4b, die in der Realität den Sensoren 4a und 4b des Produktionssystems 1 entsprechen, umfasst das Modell M zusätzlich rein virtuelle Simulations-Sensoren v5a, v5b an den beiden rechten virtuellen Arbeitsstationen v3a, v3b, deren Entsprechungen in der Realität keine Sensoren aufweisen. Den virtuellen Sensoren v4a, v4b und den rein virtuellen Simulations-Sensoren v5a, v5b sind die simulierten Sensordaten S₂ₐ, S_{2b}, S₃ₐ, S_{3b} zugeordnet.

Figur 4 zeigt einen Ablaufplan für einen möglichen Ablauf eines erfindungsgemäßen Verfahrens z.B. für ein Produktionssystem 1 nach Figur 2 mit einem Modell M nach Figur 3.

In Schritt I erfolgt die Bildung eines Modells M des Produktionssystems 1, in dem die Arbeitsstationen 2a, 2b, 3a, 3b als virtuelle Arbeitsstationen v2a, v2b, v3a, v3b abgebildet sind und die realen Sensoren 4a, 4b als virtuelle Sensoren v4a, v4b vorliegen und weitere, rein virtuelle Simulations-Sensoren v5a, v5b vorliegen, die keinen realen Sensoren des realen Produktionssystems 1 entsprechen.

In Schritt II erfolgt eine Simulation eines virtuellen Arbeitsablaufs des Produktionssystems 1 in dem Modell M innerhalb eines Zeitintervalls, während eines realen Arbeitsablaufs des Produktionssystems 1. Dabei werden Sensordaten S2a, S2b einer Anzahl von den realen Sensoren 4a, 4b entsprechenden virtuellen Sensoren v4a, v4b simuliert und diese Sensordaten S2a, S2b mit Messwerten Z2a, Z2b von entsprechenden realen Sensoren 4a, 4b verglichen.

In Schritt III erfolgt eine Ermittlung von simulierten Sensordaten S3a, S3b der Simulations-Sensoren v5a, v5b basierend auf der Simulation. Dies kann theoretisch bereits im Zuge des Schritts 1 erfolgen.

In Schritt IV erfolgt eine Ausgabe von Zustandsdaten D, z.B. simulierten Sensordaten S2a, S2b, S3a, S3b und/oder weiterer simulierter Daten zum virtuellen Arbeitsablauf in dem Zeitintervall, z.B. auf einem Monitor oder einer sonstigen Benutzerschnittstelle.

In Schritt V erfolgt eine optionale Steuerung von Arbeitsstationen 2a, 2b, 3a, 3b des Produktionssystems.

Daraufhin erfolgt die Rückkehr zu Schritt I, was zu einer erneuten Simulation ausgehend von einem späteren Stand des Produktionsablaufs resultiert.

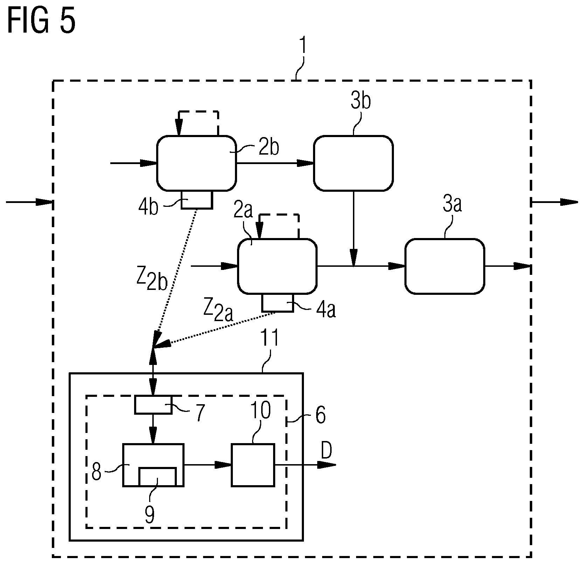

Figur 5 zeigt eine schematische Darstellung einer weiteren bevorzugten Ausführungsform eines Produktionssystems. Dieses Produktionssystem 1 ähnelt stark demjenigen aus Figur 2. Der Unterschied besteht in der Steuerung der beiden linken Arbeitsstationen 2a, 2b durch die Zustandsermittlungs-Einrichtung 6, was durch die rückführenden gestrichelten Pfeile an den betreffenden Arbeitsstationen 2a, 2b dargestellt wird.

Es wird abschließend noch einmal darauf hingewiesen, dass es sich bei den vorhergehend detailliert beschriebenen Verfahren sowie bei den dargestellten Systemen bzw. Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Modul" nicht aus, dass die betreffenden Komponenten aus mehreren zusammenwirkenden Teil-Komponenten bestehen, die gegebenenfalls auch räumlich verteilt sein können.

## Patentansprüche

1. Verfahren zum Ermitteln von Zustandsdaten (D) eines Produktionssystems (1), welches Arbeitsstationen (2a, 2b, 3a, 3b) und reale Sensoren (4a, 4b) enthält, umfassend die Schritte:
- Bildung eines Modells (M) des Produktionssystems (1), in dem die Arbeitsstationen (2a, 2b, 3a, 3b) als virtuelle Arbeitsstationen (v2a, v2b, v3a, v3b) abgebildet sind und den realen Sensoren (4a, 4b) virtuelle Sensoren (v4a, v4b) zugeordnet sind und weitere, rein virtuelle Simulations-Sensoren (v5a, v5b) vorliegen, die keinen realen Sensoren des realen Produktionssystems (1) zugeordnet sind,
- Simulation eines virtuellen Arbeitsablaufs des Produktionssystems (1) in dem Modell (M) innerhalb eines Zeitintervalls, analog zu einem realen Arbeitsablauf des Produktionssystems (1),
wobei Sensordaten (S₂ₐ, S_{2b}) einer Anzahl von den realen Sensoren (4a, 4b) zugeordneten virtuellen Sensoren (v4a, v4b) simuliert werden und diese simulierten Sensordaten (S₂ₐ, S_{2b}) mit Messwerten (Z₂ₐ, Z_{2b}) von entsprechenden realen Sensoren (4a, 4b) verglichen werden, und
wobei Sensordaten (S₃ₐ, S_{3b}) der Simulations-Sensoren (v5a, v5b) simuliert werden,
- Bildung von Zustandsdaten (D) des Produktionssystems (1) auf Basis der simulierten Sensordaten (S₂ₐ, S_{2b}, S₃ₐ, S_{3b}).

2. Verfahren nach Anspruch 1, wobei zur Bildung des Modells (M) eine Bereitstellung von Arbeitsparametern einer Anzahl von Arbeitsstationen (2a, 2b, 3a, 3b) des Produktionssystems (1) erfolgt.

3. Verfahren nach einem der vorangehenden Ansprüche, wobei basierend auf dem Vergleich der realen Messwerte (Z₂ₐ, Z_{2b}) der Anzahl von realen Sensoren (4a, 4b) mit den simulierten Sensordaten (S₂ₐ, S_{2b}) der Anzahl der jeweils den betreffenden realen Sensoren (4a, 4b) zugeordneten virtuellen Sensoren (v4a, v4b) das Modell (M) des Produktionssystems (1) angepasst wird.

4. Verfahren nach einem der vorangehenden Ansprüche, wobei eine Anzahl der Arbeitsstationen (3a, 3b) des Produktionssystems (1) als datentechnisch inaktive Arbeitsstationen (3a, 3b) keine realen Sensoren aufweist und in dem Modell (M) eine Anzahl von Simulations-Sensoren (v5a, v5b) den datentechnisch inaktiven Arbeitsstationen (3a, 3b) entsprechenden virtuellen Arbeitsstationen (v3a, v3b) zugeordnet ist und Sensordaten (S₃ₐ, S_{3b}) zu deren Arbeitsablauf gemäß dem Modell (M) simuliert werden.

5. Verfahren nach einem der vorangehenden Ansprüche, wobei die Zustandsdaten (D) des Produktionssystems (1) für eine Anzahl von Arbeitsstationen (2a, 2b, 3a, 3b) quantitative Parameter des simulierten Arbeitsablaufs über das Zeitintervall umfassen.

6. Verfahren nach einem der vorangehenden Ansprüche, wobei die Zustandsdaten (D) des Produktionssystems (1) eine Voraussage über Produktionsparameter umfassen, bevorzugt zu Fehlzuständen im Arbeitsablauf.

7. Verfahren nach einem der vorangehenden Ansprüche, wobei die Zustandsdaten (D) des Produktionssystems (1)Informationen über systematische Fehler des Produktionssystems (1) umfassen und/oder Informationen darüber enthalten, wie ein Fehlzustand vermieden werden kann.

8. Verfahren nach einem der vorangehenden Ansprüche, wobei die Simulation mittels eines trainierten neuronalen Netzwerks erfolgt.

9. Verfahren nach einem der vorangehenden Ansprüche, wobei die Zustandsdaten (D) zeitlich synchron zu einem realen Arbeitsablauf oder schneller als ein realer Arbeitsablauf ermittelt werden.

10. Verfahren nach einem der vorangehenden Ansprüche, wobei eine Arbeitsstation (2a, 2b, 3a, 3b) des Produktionssystems (1) auf Basis der ermittelten Zustandsdaten (D) gesteuert wird,
wobei bevorzugt eine datentechnisch inaktive Arbeitsstation (3a, 3b) gesteuert wird,
wobei dieser datentechnisch inaktiven Arbeitsstation (3a, 3b) in der Simulation bevorzugt ein Simulations-Sensor (v5a, v5b) zugewiesen ist und die Steuerung insbesondere einer Regelung basierend auf den entsprechenden virtuellen Sensordaten (S₂ₐ, S_{2b}, S₃ₐ, S_{3b}) entspricht.

11. Zustandsermittlungs-Einrichtung (6) zum Ermitteln von Zustandsdaten (D) eines Produktionssystems (1), welches reale Sensoren (4a, 4b) und Arbeitsstationen (2a, 2b, 3a, 3b) enthält, mittels eines Modells (M) des Produktionssystems (1), in dem die Arbeitsstationen (2a, 2b, 3a, 3b) als virtuelle Arbeitsstationen (v2a, v2b, v3a, v3b) abgebildet sind und virtuelle Sensoren (v4a, v4b) einer Anzahl der realen Sensoren (4a, 4b) zugeordnet sind und rein virtuelle Simulations-Sensoren (v5a, v5b) vorliegen, die keinen realen Sensoren des realen Produktionssystems (1) zugeordnet sind, umfassend
- eine Simulationseinheit (8) zur Simulation eines virtuellen Arbeitsablaufs des Produktionssystems (1) in dem Modell (M) innerhalb eines Zeitintervalls, analog zu einem realen Arbeitsablauf, wobei die Simulationseinheit (8) dazu ausgelegt ist,
i) Sensordaten (S₂ₐ, S_{2b}) einer Anzahl von realen Sensoren (4a, 4b) entsprechenden virtuellen Sensoren (v4a, v4b) zu simulieren und diese Sensordaten (S₂ₐ, S_{2b}) mit bereitgestellten Messwerten (Z₂ₐ, Z_{2b}) von entsprechenden realen Sensoren (4a, 4b) zu vergleichen,
ii) Sensordaten (S₃ₐ, S_{3b}) einer Anzahl von Simulations-Sensoren (v5a, v5b) zu simulieren,
- eine Ermittlungseinheit (9) zur Ermittlung von Zustandsdaten (D) des Produktionssystems (1) auf Basis der simulierten Sensordaten (S₂ₐ, S_{2b}, S₃ₐ, S_{3b}).

12. Steuereinrichtung (11) für ein Produktionssystem (1), insbesondere für eine Arbeitsstation (2a, 2b, 3a, 3b) umfassend eine Zustandsermittlungs-Einrichtung (6) nach Anspruch 11, wobei die Steuereinrichtung (11) dazu ausgestaltet ist, zumindest eine Arbeitsstation (2a, 2b, 3a, 3b) in einem Produktionssystem (1) in Abhängigkeit von simulierten Zustandsdaten (D) zu steuern.

13. Produktionssystem (1) umfassend eine Zustandsermittlungs-Einrichtung (6) nach Anspruch 11, bevorzugt umfassend eine Steuereinrichtung (11) nach Anspruch 12.

14. Computerprogrammprodukt mit einem Computerprogramm, welches direkt in eine Speichereinrichtung eines Rechensystems oder einer Steuereinrichtung (11) einer Arbeitsstation (2a, 2b, 3a, 3b) ladbar ist, mit Programmabschnitten, um alle Schritte des Verfahrens nach einem der Ansprüche 1 bis 10 auszuführen, wenn das Computerprogramm in dem Rechensystem oder der Steuereinrichtung ausgeführt wird.

15. Computerlesbares Medium, auf welchem von einem Rechensystem einlesbare und ausführbare Programmabschnitte gespeichert sind, um alle Schritte eines Verfahrens nach einem der Ansprüche 1 bis 10 auszuführen, wenn die Programmabschnitte von dem Rechensystem ausgeführt werden.
